# EUROPEAN PATENT SPECIFICATION

(11) **EP 1 741 743 B1**
(45) Date of publication and mention of the grant of the patent: **07.10.2009**
(21) Application number: 05721632.7
(22) Date of filing: 22.03.2005
(51) Int. Cl.: C08J 5/18, C09J 7/02, F16D 65/00, C08L 101/00

(54) **SURFACE SUBSTRATE FILM FOR AUTOMOBILE BRAKE DISC ANTI-RUST FILM**
OBERFLÄCHENSUBSTRATFILM FÜR AUTOBREMSSCHEIBENANTIROSTFILM
PELLICULE DE SUBSTRAT DE SURFACE POUR PELLICULE ANTIROUILLE POUR DISQUE DE FREIN D'AUTOMOBILE

(30) Priority: 19.03.2004 JP 2004079650
(43) Date of publication of application: 10.01.2007
(73) Proprietor: Lintec Corporation, Tokyo 173-0001 (JP)
(72) Inventor: IKEDA, Huminori, c/o LINTEC Corporation, Warabi-shi, Saitama 335-0005 (JP); TEZUNA, Atsushi, c/o LINTEC Corporation, Warabi-shi, Saitama 335-0005 (JP); MATSUBAYASHI, Yumiko, c/o LINTEC Corporation, Warabi-shi, Saitama 335-0005 (JP); KANAZAWA, Osamu, c/o LINTEC Corporation, Warabi-shi, Saitama 335-0005 (JP)
(74) Representative: Gille Hrabal Struck Neidlein Prop Roos
(86) International application number: PCT/JP2005/005983
(87) International publication number: WO 2005/090453

(56) References cited:
- JP-A- 6 278 658
- JP-A- 7 082 428
- JP-A- 9 242 794
- JP-A- 2003 267 001
- JP-A- 2003 313 330
- JP-U- 62 175 920

## Description

### Technical Field

The present invention relates to a surface substrate film for a motor vehicle brake disc antirust film which surface substrate film can have the motor vehicle brake disc antirust film to be hardly peeled off when adhered onto a motor vehicle wheel.

### Background Art

A motor vehicle brake disc is oxidized by rainwater infiltrating from the outside and black rust sticks thereto. Such black rust leads to causes to impair the quietness and comfortability inside the motor vehicle. Accordingly, a motor vehicle brake disc is subjected to waterproof treatment to prevent oxidation.

Conventionally, for the purpose of preventing the black rust on a motor vehicle brake disc, there has been adopted a method in which a molded pulp product is directly fitted on a brake disc. However, such a molded pulp product is poor in water resistance, necessitates a number of steps for fitting and removing it, is high in cost and suffers other disadvantages; accordingly, there has recently been proposed the substitution of such a molded pulp product with a pressure-sensitive adhesive film (Japanese Patent Laid-Open No. 7-309510). Such a pressure-sensitive adhesive film is referred to as an antirust film, and is adhered to a tire wheel because the pressure-sensitive adhesive film has advantages such that it involves simple steps for adhesion and peeling and is capable of preventing the external flaw of the tire wheel. The antirust film is required to have three-dimensional curved surface followability because the tire wheel as an adherend has a three-dimensional curved shape. From such a viewpoint, flexible polyethylene film is used as a substrate film.

On the other hand, a motor vehicle chassis is aerodynamically designed, for the purpose of cooling the brake disc, in such a way that the air flow entering from the front of the motor vehicle is sucked toward tire wheels while the motor vehicle is running. Consequently, an air pressure is exerted from the inside on the antirust film. Thus, there is a problem such that the antirust film is peeled off when a motor vehicle is being transported on a carrier car or when a completed motor vehicle is being subjected to a running test. Additionally, an aluminum wheel has an advantage that it is superior in workability to a stainless steel wheel, and hence sophistication of design has been advanced for aluminum wheels; aluminum wheels with thin spokes predominate from the viewpoints of mileage improvement by weight reduction, reduction of environmental burdens by decreasing the consumed amounts of materials, and improvement of cooling efficiency of brake discs. As a result, a reduced adhesion area is available for an antirust film to be adhered to an aluminum wheel, and hence there is a tendency that peeling problems are increasingly encountered.

### Disclosure of the Invention

An object of the present invention is to provide, by solving the above described problems, a surface substrate film for a motor vehicle brake disc antirust film which surface substrate film is hardly peeled off when adhered onto a motor vehicle wheel.

The present inventors have perfected the present invention by discovering, as a result of a diligent study carried out to solve the above described problems, that the above described problems can be solved by providing the surface substrate film with a specific tensile modulus of elasticity.

Specifically, the present invention provides a surface substrate film for a motor vehicle brake disc antirust film which surface substrate film is characterized by having a tensile modulus of elasticity of 220 to 2200 MPa.

Additionally, the present invention provides a surface substrate film for a motor vehicle brake disc antirust film according to the above description, the surface substrate film being made to include an ultraviolet absorber in a proportion of 0.01 to 20 parts by mass relative to 100 parts by mass of the surface substrate film in such a way that the spectral transmittance of the surface substrate film in a wavelength region from 200 to 380 nm falls within a range from 0 to 20%.

Further, the present invention provides a motor vehicle brake disc antirust film, characterized by including a pressure-sensitive adhesive layer on one surface of the surface substrate film according to the above descriptions.

The surface substrate film for a motor vehicle brake disc antirust film of the present invention is hardly peeled off and excellent in prevention of black rust to be formed on a motor vehicle brake disc, when the surface substrate film is provided with a pressure-sensitive adhesive layer on one surface thereof, used as a motor vehicle brake disc antirust film, and adhered to the wheel so as for the surface of the pressure-sensitive adhesive layer to face and touch the wheel. Preferred Embodiments for Carrying Out the Invention

The surface substrate film for a motor vehicle brake disc antirust film of the present invention has a tensile modulus of elasticity of 220 to 2200 MPa, preferably 240 to 2000 MPa, and particularly preferably 240 to 1500 MPa.

As long as the surface substrate film for a motor vehicle brake disc antirust film has a tensile modulus falling within the above described ranges, the surface substrate film for a motor vehicle brake disc antirust film can be made of various materials. Examples of such preferable materials include a mixture composed of low density polyethylene resin and high density polyethylene resin, polyethylene terephthalate resin and polypropylene resin.

The mixing ratio of low density polyethylene resin in the mixture composed of low density polyethylene resin and high density polyethylene resin is 30 to 95 parts by mass and preferably 50 to 90 parts by mass in 100 parts by mass of the mixture. Herein, low density polyethylene resin may be either branched low density polyethylene resin or straight chain low density polyethylene resin; however, straight chain low density polyethylene resin is preferable. Examples of low density polyethylene resin and high density polyethylene resin include ethylene homopolymer or copolymer resins composed of ethylene as the main component and at least one of α-olefins such as propylene, 1-butene and 1-pentene. Combinations of two, three, four or more α-olefins may also be adopted. The density of low density polyethylene resin is 0.910 to 0.940 g/cm³, preferably 0.918 to 0.938 g/cm³ and particularly preferably 0.923 to 0.933 g/cm³. The density of high density polyethylene resin is 0.945 to 0.960 g/cm³ and preferably 0.950 to 0.959 g/cm³.

The surface substrate film for a motor vehicle brake disc antirust film may be formed of either a single layer or multiple layers having two or more layers of the same type or different types. Additionally, the surface substrate film for a motor vehicle brake disc antirust film may be subjected to a drawing treatment such as a uniaxial drawing or a biaxial drawing.

Examples of the method for molding the surface substrate film include the extrusion molding method and the inflation molding method; however, the inflation molding method is preferable.

As the drawing method, various drawing methods can be applied. Examples of such a drawing method include a longitudinal uniaxial drawing method based on a group of rollers different from each other in circumferential velocity, a lateral uniaxial drawing method based on a tenter oven, a biaxial drawing method as a combination of these methods, and a tubular drawing method based on inflation.

The surface substrate film may be subjected to an annealing treatment after drawing.

The thickness of the surface substrate film for a motor vehicle brake disc antirust film falls within a range from 20 to 200 µm, and preferably within a range from 30 to 100 µm.

The surface substrate film for a motor vehicle brake disc antirust film is preferably made to include an ultraviolet absorber in such a way that the spectral transmittance of the surface substrate film in a wavelength region from 200 to 380 nm falls within a range from 0 to 20%. The content of the ultraviolet absorber is preferably 0.01 to 20 parts by mass in 100 parts by mass of the surface substrate film. The inclusion of the ultraviolet absorber improves the resistance to weather, and the film can be peeled off without leaving any pressure-sensitive adhesive deposit on the adherend even when exposed in outdoor over a long period of time.

Specific examples of the ultraviolet absorber include hydroquinone-based ultraviolet absorbers, salicylate-based ultraviolet absorbers, benzophenone-based ultraviolet absorbers, benzotriazole-based ultraviolet absorbers and cyanoacrylate-based ultraviolet absorbers.

Examples of the hydroquinone-based ultraviolet absorbers include hydroquinone and hydroquinone disalicylate. Examples of the salicylate-based ultraviolet absorbers include phenyl salicylate and p-octylphenyl salicylate. Examples of benzophenone-based ultraviolet absorbers include 2-hydroxy-4-methoxybenzophenone, 2-hydroxy-4-n-octoxybenzophenone, 2-hydroxy-4-methoxy-2'-carboxybenzophenone, 2,4-dihydroxybenzophenone, 2,2'-dihydroxy-4,4'-dimethoxybenzophenone, 2-hydroxy-4-benzoyloxybenzophenone, 2,2'-dihydroxy-4-methoxybenzophenone, 2-hydroxy-4-methoxy-5-sulfonebenzophenone, 2,2',4,4'-tetrahydroxybenzophenone, 2,2'-dihydroxy-4,4'-dimethoxy-5-sodiumsulfobenzophenone, 4-dodecyloxy-2-hydroxybenzophenone, and 2-hydroxy-5-chlorobenzophenone.

Examples of the benzotriazole-based ultraviolet absorbers include 2-(2'-hydroxy-3'-t-butyl-5'-methylphenyl)-5-chlorobenzotriazole, 2-(2'-hydroxy-5'-methylphenyl)benzotriazole, 2-(2'-hydroxy-5'-methylphenyl)-5-carboxylic acid butyl ester benzotriazole, 2-(2'-hydroxy-5'-methylphenyl)-5,6-dichlorobenzotriazole, 2-(2'-hydroxy-5'-methylphenyl)-5-ethylsulfonebenzotriazole, 2-(2'-hydroxy-5'-t-butylphenyl)-5-chlorobenzotriazole, 2-(2'-hydroxy-5'-t-butylphenyl)benzotriazole, 2-(2'-hydroxy-5'-amylphenyl)benzotriazole, 2-(2'-hydroxy-3',5'-dimethylphenyl)benzotriazole, 2-(2'-hydroxy-3',5'-dimethylphenyl)-5-methoxybenzotriazole, 2-(2'-methyl-4'-hydroxyphenyl)benzotriazole, 2-(2'-stearyloxy-3',5'-dimethylphenyl)-5-methylbenzotriazole, 2-(2'-hydroxy-5-carboxylic acid phenyl)benzotriazole ethyl ester, 2-(2'-hydroxy-3'-methyl-5'-t-butylphenyl)benzotriazole, 2-(2'-hydroxy-3',5'-di-t-butylphenyl)-5-chlorobenzotriazole, 2-(2'-hydroxy-5-methoxyphenyl)benzotriazole, 2-(2'-hydroxy-5'-phenylphenyl)-5-chlorobenzotriazole, 2-(2'-hydroxy-5'-cyclohexylphenyl)benzotriazole, 2-(2'-hydroxy-4',5'-dimethylphenyl)-5-carboxylic acid benzotriazole butyl ester, 2-(2'-hydroxy-3',5'-dichlorophenyl)benzotriazole, 2-(2'-hydroxy-4',5'-dichloro)benzotriazole, 2-(2'-hydroxy-3',5'-dimethylphenyl)-5-ethylsulfonebenzotriazole, 2-(2'-hydroxy-5'-phenylphenyl)benzotriazole, 2-(2'-hydroxy-5'-octoxyphenyl)benzotriazole, 2-(2'-hydroxy-4'-octoxyphenyl)benzotriazole, 2-(2'-hydroxy-5'-methoxyphenyl)-5-methylbenzotriazole, 2-(2'-hydroxy-5'-methylphenyl)-5-carboxylic acid ester benzotriazole, 2-(2'-acetoxy-5'-methylphenyl)benzotriazole, 2-(2'-hydroxy-3',5'-di-t-butylphenyl)-5-chlorobenzotriazole, and 2-2'-methylenebis[6-(2-benzotriazol-2-yl)-4-(1,1,3,3-tetramethylbutyl)phenol]. Examples of the cyanoacrylate-based ultraviolet absorbers include ethyl 2-cyano-3,3-diphenylacrylate and 2-ethylhexyl 2-cyano-3,3-diphenylacrylate.

Preferred among these ultraviolet absorbers are the benzophenone-based ultraviolet absorbers and the benzotriazole-based ultraviolet absorbers. In particular, preferred as the benzophenone-based ultraviolet absorbers are 2,3'-dihydroxy-4,4'-dimethoxybenzophenone, 2,2'-dihydroxy-4-methoxybenzophenone and 2,2',4,4'-tetrahydroxybenzophenone; and preferred as the benzotriazole-based ultraviolet absorbers are 2-(2'-hydroxy-5'-methylphenyl)benzotriazole, 2-(2'-hydroxy-5'-methylphenyl)-5,6-dichlorobenzotriazole, 2-(2'-hydroxy-5'-t-butylphenyl)benzotriazole, 2-(2'-hydroxy-3'-methyl-5'-t-butylphenyl)benzotriazole, 2-(2'-hydroxy-3',5'-di-t-butylphenyl)-5-chlorobenzotriazole, 2-(2'-hydroxy-5'-phenylphenyl)-5-chlorobenzotriazole, 2-(2'-hydroxy-3'-t-butyl-5'-methylphenyl)-5-chlorobenzotriazole, and 2-(2'-hydroxy-5'-octoxyphenyl)benzotriazole.

These ultraviolet absorbers can be used each alone or in combinations of two or more thereof.

Additionally, one or more weather resistant agents such as a photostabilizer and an antioxidant can be appropriately included together with the ultraviolet absorber.

The surface substrate film for a motor vehicle brake disc antirust film is a substrate film to be disposed on the surface of a motor vehicle brake disc antirust film.

In the present invention, a pressure-sensitive adhesive layer is preferably provided on one surface of the surface substrate film for a motor vehicle brake disc antirust film.

Examples of the pressure-sensitive adhesive to be used for the pressure-sensitive adhesive layer include natural rubber-based pressure-sensitive adhesives, synthetic rubber-based pressure-sensitive adhesives, acrylic resin-based pressure-sensitive adhesives, polyvinylether resin-based pressure-sensitive adhesives, urethane resin-based pressure-sensitive adhesives and silicone resin-based pressure-sensitive adhesives. Specific examples of the synthetic rubber-based pressure-sensitive adhesives include styrene-butadiene rubber, polyisobutylene rubber, isobutylene-isoprene rubber, isoprene rubber, styrene-isoprene block copolymer, styrene-butadiene block copolymer, styrene-ethylenebutylene block copolymer and ethylene-vinyl acetate thermoplastic elastomer.

Specific examples of the acrylic resin-based pressure-sensitive adhesives include the copolymers of two or more of the following copolymerizable monomers: (meth)acrylic acids such as acrylic acid and methacrylic acid; alkyl (meth)acrylates such as methyl acrylate, ethyl acrylate, propyl acrylate, butyl acrylate, 2-ethylhexyl acrylate, methyl methacrylate, ethyl methacrylate and butyl methacrylate; hydroxy group-containing alkyl (meth)acrylates such as 2-hydroxyethyl acrylate, 2-hydroxypropyl acrylate, 3-hydroxypropyl acrylate, 3-hydroxybutyl acrylate and 4-hydroxybutyl acrylate; and if needed, vinyl esters such as vinyl acetate and vinyl propionate; and styrene, vinylpyridine, acrylonitrile and methacrylonitrile.

Specific examples of the polyvinylether resin-based pressure-sensitive adhesives include polyvinylether and polyvinylisobutylether. Specific examples of the silicone resin-based pressure-sensitive adhesives include dimethylpolysiloxane. These pressure-sensitive adhesives can be used each alone or in combinations of two or more thereof.

Preferred among these pressure-sensitive adhesives are the acrylic resin-based pressure-sensitive adhesives. Particularly preferred are acrylic resin-based pressure-sensitive adhesives obtained by crosslinking acrylic copolymers with a polyisocyanate compound. The weight average molecular weight of each of the acrylic copolymers is preferably 500,000 to 1,100,000, more preferably 600,000 to 1,000,000, and particularly preferably 650,000 to 950,000.

Examples of the polyisocyanate compound include tolylene diisocyanate (TDI), hexamethylene diisocyanate (HMDI), isophorone diisocyanate (IPDI), xylene diisocyanate (XDI), hydrogenated tolylene diisocyanate, diphenylmethane diisocyanate and the hydrogenated product thereof, polymethylenepolyphenyl polyisocyanate, naphthylene-1,5-diisocyanate, polyisocyanate prepolymer and polymethylolpropane modified TDI. Preferred as the polyisocyanate compounds are diisocyanate compounds, triisocyanate compounds, tetraisocyanate compounds and pentaisocyanate compounds; particularly preferred are diisocyanate compounds and triisocyanate compounds. By controlling the crosslinking amounts of the polyisocyanate compounds, pressure-sensitive adhesive physical properties required for various coated surfaces can be attained. The use amount of each of the polyisocyanate compounds is preferably 0.01 to 20 parts by mass relative to 100 parts by mass of an acrylic copolymer. The polyisocyanate compounds can be used each alone or in combinations of two or more thereof.

When crosslinking is carried out, it is preferable to fully mix together an acrylic copolymer and a polyisocyanate compound, in particular, to fully mix together in a solvent. The total concentration of the acrylic copolymer and the polyisocyanate compound in the solvent is preferably 20 to 80% by mass, and particularly preferably 30 to 70% by mass. Examples of the solvent include fatty acid esters such as ethyl acetate; ketones such as methyl ethyl ketone and diethyl ketone; aliphatic hydrocarbons such as hexane, heptane and octane; and aromatic hydrocarbons such as benzene and toluene. These solvents can be used each alone or in combinations of two or more thereof. As the solvent, the polymerization solvent of the acrylic copolymer may also be used as it is.

The crosslinking temperature can be appropriately selected; however, usually, it may be 0 to 100°C, and is preferably 10 to 40°C. The crosslinking may be carried out in a state of a solution, or either during or after drying subsequent to the coating.

It is preferable to make the pressure-sensitive adhesive layer include an ultraviolet absorber in such a way that the spectral transmittance of the motor vehicle brake disc antirust film in a wavelength region from 200 to 380 nm falls within a range from 0 to 20%. The mixing ratio of the ultraviolet absorber is preferably 0.01 to 20% by mass relative to the resin component of the pressure-sensitive adhesive layer.

Additionally, one or more of a tackifier, a softener, an antiaging agent, a filler and a colorant such as a dye or a pigment can be appropriately mixed in the pressure-sensitive adhesive layer. Examples of the tackifier include rosin-based resins, terpenephenol resins, terpene resins, aromatic hydrocarbon-modified terpene resins, petroleum resins, chmarone-indene resins, styrene-based resins, phenolic resins and xylene resins. Examples of the softener include process oils, liquid rubbers and plasticizers. Examples of the filler include silica, talc, clay and calcium carbonate.

The thickness of the pressure-sensitive adhesive layer is 1 to 300 µm, and is preferably 2 to 150 µm and particularly preferably 5 to 100 µm.

The pressure-sensitive adhesive layer may be formed by directly coating one surface of the surface substrate film, or may be formed on one surface of the surface substrate film by bonding the surface of the pressure-sensitive adhesive layer of a release liner and the surface substrate film to each other, wherein the release liner has been prepared as a release liner with the pressure-sensitive adhesive layer formed by coating beforehand a pressure-sensitive adhesive on the releasing agent layer surface of the release liner and by drying the pressure-sensitive adhesive layer. No particular constraint is imposed on the method for forming the pressure-sensitive adhesive layer, and various methods can be adopted. Examples of such methods include methods for forming by coating with the following coaters and drying: an airknife coater, a blade coater, a bar coater, a gravure coater, a roll coater, a roll knife coater, a curtain coater, a die coater, a knife coater, a screen coater, a Mayer bar coater and a kiss coater.

The surface of the pressure-sensitive adhesive layer is preferably covered with a release liner. Alternatively, without using a release liner, it is possible to impart releasability to the surface substrate film by coating a releasing agent on the surface of the surface substrate film, prepare a pressure-sensitive adhesive film in which a pressure-sensitive adhesive layer is provided on the nonreleasing surface of the surface substrate film, and roll pressure-sensitive adhesive film thus obtained in such a way that the releasing surface and the surface of the pressure-sensitive adhesive layer are brought into contact with each other to store. Thus, the surface of the pressure-sensitive adhesive layer can be protected.

As the release liner, any types may be used. For example, there can be used a release liner in which the surface, to be bonded to the pressure-sensitive adhesive layer, of the substrate of the release liner is subjected to a release treatment, if needed, wherein adopted as the substrate are the films formed of various resins such as polyethylene terephthalate, polybutylene terephthalate, polyethylene, polypropylene and polyacrylate, and also are various paper materials such as polyethylene laminate paper, polypropylene laminate paper, clay coated paper, resin coated paper, glassine paper and woodfree paper.

In this case, typical examples of the release treatment include the formation of a releasing agent layer formed of a releasing agent such as a silicone-based resin, a long-chain alkyl based resin or a fluorine-based resin.

No particular constraint is imposed on the thickness of the release liner, and the thickness may be appropriately selected. Adhesion, to an adherend, of the motor vehicle brake disc antirust film that uses the surface substrate film for a motor vehicle brake disc antirust film of the present invention can be carried out by preferably providing a pressure-sensitive adhesive layer on one surface of the surface substrate film, peeling off the release liner when the release liner covers the surface of the pressure-sensitive adhesive layer, and adhering the pressure-sensitive adhesive layer onto the surface of the adherend such as a wheel. Alternatively, when no pressure-sensitive adhesive layer is provided on one surface of the motor vehicle brake disc antirust film, a pressure-sensitive adhesive layer is provided on the surface of the adherend such as a wheel, and the motor vehicle brake disc antirust film can also be adhered onto the surface of the pressure-sensitive adhesive layer.

### Examples

Hereinafter, specific description will be made on the present invention with reference to Examples. However, the present invention is not limited at all by these Examples.

### (Example 1)

### Preparation of a Surface Substrate film

A mixture was prepared by mixing 85 parts by mass of a straight chain low density polyethylene resin having a density of 0.928 g/cm³ with a 15 parts by mass of a high density polyethylene resin having a density of 0.954 g/cm³. By using the mixture thus obtained as the raw material, a polyethylene resin film having a thickness of 50 µm and a tensile modulus of elasticity of 250 MPa was prepared with an inflation film molding machine.

### Preparation of an Acrylic Copolymer

In a reaction apparatus equipped with a thermometer, a stirrer, a reflux condenser tube and a nitrogen gas introduction tube, 54 parts by mass of 2-hydroxyethyl acrylate, 27 parts by mass of ethyl acrylate, 17 parts by mass of vinyl acetate, 2 parts by mass of acrylic acid and 100 parts by mass of ethyl acetate were placed, and the reaction mixture thus obtained was allowed to copolymerize in the presence of a polymerization initiator, namely, azobisisobutyronitrile, to yield an acrylic copolymer having a weight average molecular weight of 800,000.

Preparation of a pressure-sensitive adhesive Film Provided with a pressure-sensitive adhesive Layer

A mixture was prepared by adding 5.0 parts by mass of an isocyanate-based crosslinking agent (trade name: Coronate L, manufactured by Japan Polyurethane Industry Co., Ltd.) to 100 parts by mass of the resin component of the above described acrylic resin-based pressure-sensitive adhesive. The mixture thus obtained was coated, with a Mayer bar at room temperature (25°C), on one surface of a surface substrate film that was the above described polyethylene resin film so as for the coating amount after drying to be 25 µm, and then dried at 40°C to prepare a crosslinked pressure-sensitive adhesive layer. Thereafter, the release layer of a release liner and the above described pressure-sensitive adhesive layer were bonded with a laminator to prepare a pressure-sensitive adhesive film, wherein the release liner (trade name: KGM-11S White, manufactured by Lintec Corp.) was a product obtained by forming a release layer by coating a silicone resin as a releasing agent on one surface of a support made of a woodfree paper.

### (Example 2)

A mixture was prepared by mixing 70 parts by mass of a low density polyethylene resin having a density of 0.928 g/cm³ with a 30 parts by mass of a high density polyethylene resin having a density of 0.954 g/cm³. By using the mixture thus obtained as the raw material, a polyethylene resin film having a thickness of 50 µm and a tensile modulus of elasticity of 340 MPa was prepared with an inflation film molding machine. A pressure-sensitive adhesive film was prepared in the same manner as in Example 1 except that this polyethylene resin film was used as the surface substrate film.

### (Example 3)

A mixture was prepared by mixing 55 parts by mass of a low density polyethylene resin having a density of 0.928 g/cm³ with a 45 parts by mass of a high density polyethylene resin having a density of 0.954 g/cm³. By using the mixture thus obtained as the raw material, a polyethylene resin film having a thickness of 50 µm and a tensile modulus of elasticity of 380 MPa was prepared with an inflation film molding machine. A pressure-sensitive adhesive film was prepared in the same manner as in Example 1 except that this polyethylene resin film was used as the surface substrate film.

### (Example 4)

A mixture was prepared by mixing 70 parts by mass of a low density polyethylene resin having a density of 0.928 g/cm³ with a 30 parts by mass of a high density polyethylene resin having a density of 0.954 g/cm³ and by further mixing 10 parts by mass of a benzotriazole-based ultraviolet absorber (2-(2'-hydroxy-3'-tert-butyl-5'-methylphenyl)-5-chlorobenzotriazole, trade name: Tinuvin 326, manufactured by Ciba Specialty Chemicals Corp.) in 100 parts by mass of these polyethylene resins. By using the mixture thus obtained as the raw material, a polyethylene resin film having a thickness of 50 µm, a tensile modulus of elasticity of 340 MPa and a spectral transmittance of less than 1% in a wavelength region from 200 to 380 nm was prepared with an inflation film molding machine. A pressure-sensitive adhesive film was prepared in the same manner as in Example 1 except that this polyethylene resin film was used as the surface substrate film.

### (Comparative Example 1)

By using a low density polyethylene resin having a density of 0.928 g/cm³ as the raw material, a polyethylene resin film having a thickness of 50 µm and a tensile modulus of elasticity of 210 MPa was prepared with an inflation film molding machine.

Measurements of Physical Properties of Pressure-sensitive adhesive Films

The surface substrate films and the pressure-sensitive adhesive films prepared in Examples and Comparative Example were subjected to the following tensile modulus of elasticity measurement, pressure-sensitive adhesive strength measurement, sunshine weatherometer (hereinafter abbreviated as SWOM) test, and film peeling test and adherend staining test after motor vehicle running. The results thus obtained are shown in Table 1.

### (1) Measurement of Tensile Modulus of Elasticity

The specimens obtained from the polyethylene resin films prepared in above described Examples and Comparative Example were subjected to the measurement of the tensile modulus of elasticity according to JIS 7127.

### (2) Measurement of Pressure-sensitive adhesive Strength

The pressure-sensitive adhesive films prepared in above described Examples and Comparative Example were subjected to the measurement of the pressure-sensitive adhesive strength in an environment of 23°C and 50% RH in conformity with JIS Z0237 wherein an aluminum plate coated with a paint (trade name: Magicron ALC-2-1, manufactured by Kansai Paint Co., Ltd.) was used as an adherend.

### (3) SWOM Test

The pressure-sensitive adhesive films prepared in above described Examples and Comparative Example were subjected to the measurement of the pressure-sensitive adhesive strength based on the above described measurement method after a 500 hour irradiation in SWOM (trade name: Sunshine Super Long Life Weatherometer WEL-SUN-HCH, manufactured by Suga Test Instruments Co., Ltd.).

### (4) Film Peeling Test after Motor vehicle Running

Each of the pressure-sensitive adhesive films prepared in above described Examples and Comparative Example was adhered onto the surface of an aluminum wheel of a motor vehicle (trade name: Cercio, manufactured by Toyota Motor Corp.); the motor vehicle was driven at a speed of 80 km/hour for 60 minutes and then the peeling of the adhered pressure-sensitive adhesive film was evaluated on the basis of the following standards.
Good: No peeling occurred.
Poor: Peeling occurred.

### (5) Adherend Staining Test

Each of the pressure-sensitive adhesive films prepared in above described Examples and Comparative Example was adhered onto an adherend prepared with an aluminum plate coated with a paint (trade name: Magicron ALC-2-1, manufactured by Kansai Paint Co., Ltd.), and was subjected, as it was adhered, to a SWOM test; after a SWOM test for 500 hours, the adherend with the pressure-sensitive adhesive film was taken out, and the adhered pressure-sensitive adhesive film was peeled off from the adherend; the staining state of the adherend at the time of this peeling off was evaluated on the basis of the following standards.
Good: The adherend was not stained.
Poor: The adherend was stained.

**Table 1**

| | Example 1 | Example 2 | Example 3 | Example 4 | Comp. Ex. 1 |
|---|---|---|---|---|---|
| Content of low density polyethylene resin (parts by mass) | 85 | 70 | 55 | 70 | 100 |
| Content of high density polyethylene resin (parts by mass) | 15 | 30 | 45 | 30 | - |
| Ultraviolet absorber (parts by mass) | - | - | - | 10 | - |
| Tensile modulus of elasticity (MPa) | 250 | 340 | 380 | 340 | 210 |
| Pressure-sensitive adhesive strength (N/25 mm) | 5.1 | 5.5 | 5.9 | 5.6 | 4.5 |
| Peeling after motor vehicle running | Good | Good | Good | Good | Poor |
| Pressure-sensitive adhesive strength after SWOM for 500 hr (N/25 mm) | - | - | - | 5.8 | 6.7 |
| Adherend staining after SWOM for 500 hr | - | - | - | Good | Poor |

Because Examples 1 to 3 each used as the surface substrate film the film having a tensile modulus of elasticity of 250 to 380 MPa, Examples 1 to 3 are larger in pressure-sensitive adhesive strength as compared to Comparative Example 1 using as the surface substrate film the film having a tensile modulus of elasticity of 210 MPa, and suffered no film peeling due to motor vehicle running in contrast to Comparative Example 1. Example 4 in which an ultraviolet absorber was added underwent no increase of the pressure-sensitive adhesive strength and no staining of the adherend after the SWOM test. On the contrary, in Comparative Example 1, the pressure-sensitive adhesive strength increase after the SWOM test was remarkable, and the adherend staining due to the cohesion failure of the pressure-sensitive adhesive strength was observed.

The surface substrate film for a motor vehicle brake disc antirust film of the present invention can be utilized as a motor vehicle brake disc antirust film.

## Claims

1. A motor vehicle brake disc antirust film for adhering onto a motor vehicle wheel,
comprising a pressure-sensitive adhesive layer on one surface of a surface substrate film
wherein the pressure-sensitive adhesive layer has a thickness of 1 to 300 µm and the surface substrate film has a thickness of 20 to 200 µm, and
wherein the surface substrate film is a polyethylene resin film comprising a mixture of a low density polyethylene resin having a density of 0.910 to 0.940 g/cm³ and a high density polyethylene resin having a density of 0.945 to 0.960 g/cm³ in a ratio of 30 to 95 parts by mass of the low density polyethylene resin relative to 100 parts by mass of the mixture and has a tensile modulus of elasticity of 220 to 2200 MPa.

2. The motor vehicle brake disc antirust film according to claim 1, wherein a pressure-sensitive adhesive used for the pressure-sensitive adhesive layer is a pressure-sensitive adhesive selected from the group consisting of natural rubber-based pressure-sensitive adhesive, synthetic rubber-based pressure-sensitive adhesive, acrylic resin-based pressure-sensitive adhesive, polyvinylether resin-based pressure-sensitive adhesive, urethane resin-based pressure-sensitive adhesive and silicone resin-based pressure-sensitive adhesive.

3. The motor vehicle brake disc antirust film according to claim 1 or 2, wherein the pressure-sensitive adhesive used for the pressure-sensitive adhesive layer is an acrylic resin-based pressure-sensitive adhesive obtained by cross-linking an acrylic copolymer having a weight average molecular weight of 500,000 to 1,100,000 with a polyisocyanate compound.

4. The motor vehicle brake disc antirust film according to any of claims 1 to 3, wherein the surface substrate film comprises an ultraviolet absorber in a proportion of 0.01 to 20 parts by mass relative to 100 parts by mass of the surface substrate film in such a way that the spectral transmittance of the surface substrate film in a wavelength region from 200 to 380 nm falls within a range from 0 to 20%.

## Patentansprüche

1. Motorfahrzeug-Scheibenbremsen-Antirostfilm zum Ankleben an ein Motorfahrzeugrad,
umfassend eine druckempfindliche Klebstoffstoffschicht auf einer Oberfläche eines Oberflächensubstratfilms,
wobei die druckempfindliche Klebestoffschicht eine Dicke von 1 bis 300 µm aufweist und der Oberflächensubstratfilm eine Dicke von 20 bis 200 µm aufweist,
und
wobei der Oberflächensubstratfilm ein Polyethylenharzfilm ist, umfassend ein Gemisch aus einem Polyethylenharz niedriger Dichte mit einer Dichte von 0,910 bis 0,940 g/cm³ und einem Polyethylenharz hoher Dichte mit einer Dichte von 0,945 bis 0,960 g/cm³ in einem Verhältnis von 30 bis 95 Gewichtsteilen des Polyethylenharzes niedriger Dichte bezogen auf 100 Gewichtsteile des Gemisches, und ein Plastizitäts-Zugmodul von 220 bis 2200 MPa aufweist,

2. Motorfahrzeug-Scheibenbremsen-Antirostfilm nach Anspruch 1 , wobei der für die druckempfindliche Klebstoffschicht verwendete druckempfindliche Klebstoff ein druckempfindlicher Klebstoff ist, der ausgewählt wird aus der Gruppe, die besteht aus druckempfindlichem Klebstoff auf Naturkautschuk-Basis, druckempfindlichem Klebstoff auf Kunstkautschuk-Basis, druckempfindlichem Klebstoff auf Acrylharz-Basis, druckempfindlichem Klebstoff auf Polyvinyletherharz-Basis, druckempfindlichem Klebstoff auf Urethanharz-Basis und druckempfindlichem Klebstoff auf Siliconharz-Basis,

3. Motorfahrzeug-Scheibenbremsen-Antirostfilm nach Anspruch 1 oder 2,
wobei der für die druckempfindliche Klebstoffschicht verwendete druckempfindliche Klebstoff ein druckempfindlicher Klebstoff auf Acrylharz-Basis ist, der erhalten wird durch Vernetzen eines Acrylpolymeren, welches ein gewichtsmittleres Molekulargewicht von 500.000 bis 1.100.000 aufweist, mit einer Polyisocyanatverbindung,

4. Motorfahrzeug-Scheibenbremsen-Antirostfilm nach einem der Ansprüche 1 bis 3, wobei der Oberflächensubstratfilm einen Ultraviolettabsorber in einem Anteil von 0,01 bis 20 Gewichtsteilen bezogen auf 100 Gewichtsteile des Oberflächensubstratfilms umfasst derart, dass die spektrale Durchlässigkeit des Oberflächensubstratfilms im Wellenlängenbereich von 200 bis 380 nm im Bereich von 0 bis 20 % liegt.

## Revendications

1. Pellicule antirouille de disque de frein de véhicule à moteur destinée à adhérer sur une roue de véhicule à moteur,
comprenant une couche adhésive sensible à la pression sur une surface d'une pellicule de substrat de surface,
dans laquelle la couche adhésive sensible à la pression présente une épaisseur comprise entre 1 µm et 300 µm, et la pellicule de substrat de surface présente une épaisseur comprise entre 20 µm et 200 µm, et
dans laquelle la pellicule de substrat de surface est une pellicule de résine de polyéthylène qui comprend un mélange d'une résine de polyéthylène à faible densité qui présente une densité comprise entre 0,910 g/cm³ et 0,940 g/cm³, et d'une résine de polyéthylène à haute densité qui présente une densité comprise entre 0,945 g/cm³ et 0,960 g/cm³ dans un rapport compris entre 30 et 95 parties en masse de la résine de polyéthylène à faible densité par rapport à 100 parties en masse du mélange, et présente un module d'élasticité en tension comprise entre 220 MPa et 2200 MPa.

2. Pellicule antirouille de disque de frein de véhicule à moteur selon la revendication 1, dans laquelle un adhésif sensible à la pression utilisé pour la couche adhésive sensible à la pression, est un adhésif sensible à la pression sélectionné dans le groupe constitué par un adhésif sensible à la pression à base de caoutchouc naturel, un adhésif sensible à la pression à base de caoutchouc synthétique, un adhésif sensible à la pression à base de résine acrylique, un adhésif sensible à la pression à base de résine de polyvinyléther, un adhésif sensible à la pression à base de résine d'uréthane et un adhésif sensible à la pression à base de résine de silicone.

3. Pellicule antirouille de disque de frein de véhicule à moteur selon la revendication 1 ou la revendication 2, dans laquelle l'adhésif sensible à la pression utilisé pour la couche adhésive sensible à la pression, est un adhésif sensible à la pression à base de résine acrylique obtenue par réticulation d'un copolymère acrylique qui présente un poids moléculaire moyen compris entre 500 000 et 1 100 000 avec un composé de polyisocyanate.

4. Pellicule antirouille de disque de frein de véhicule à moteur selon l'une quelconque des revendications 1 à 3, dans laquelle la pellicule de substrat de surface comprend un agent absorbant des rayons ultraviolets dans une proportion comprise entre 0,01 et 20 parties en masse par rapport à 100 parties en masse de la pellicule de substrat de surface, de telle sorte que la transmittance spectrale de la pellicule de substrat de surface dans une plage de longueurs d'onde comprises entre 200 nm et 380 nm, se situe dans une plage comprise entre 0 % et 20 %.
